# EUROPÄISCHE PATENTSCHRIFT

(11) **EP 0 504 482 B1**
(45) Veröffentlichungstag und Bekanntmachung des Hinweises auf die Patenterteilung: **29.10.1997**
(21) Anmeldenummer: 91120954.2
(22) Anmeldetag: 06.12.1991
(51) Int. Cl.: B60R 21/13

(54) **Antrieb für einen translatorisch ausfahrbaren Überrollbügel**
Driving device for a translatory movable roll bar
Dispositif d'entraînement pour un arceau de sécurité déplaçable en translation

(30) Priorität: 19.03.1991 DE 4108878
(43) Veröffentlichungstag der Anmeldung: 23.09.1992
(73) Patentinhaber: Alfred Teves GmbH & Co. OHG, 51702 Bergneustadt (DE)
(72) Erfinder: Reuber, Gerhard, W-5962 Drolshagen (DE); Braun, Achim, W-5223 Nümbrecht (DE); Löwen, Jakob, W-5270 Gummersbach (DE)
(74) Vertreter: Portwich, Peter

(56) Entgegenhaltungen:
- EP-A- 0 459 213
- WO-A-91/02669
- DE-C- 3 732 562

## Beschreibung

Die vorliegende Erfindung betrifft einen Antrieb für einen translatorisch ausfahrbaren Überrollbügel gemäß dem Oberbegriff des Anspruchs 1. Mit translatorischer Bewegung ist die Bewegung durch Parallelverschiebung in Bewegungsrichtung des Bügels gemeint, wobei die Bewegung im wesentlichen in der Ebene stattfinden soll, die die Lage des Bügels beschreibt bzw. in der er angeordnet ist.

Ein translatorisch ausfahrender Überrollbügel ist beispielsweise aus der DE-OS 15 55 955 bekannt. Dabei wird der bekannte Überollbügel im Crash-Fall, d.h. einer unmittelbar bevorstehenden Unfallgefahr, schnell in der Ebene ausgefahren, in der er liegt. Durch eine derartige Bewegung werden mögliche Unannehmlichkeiten vermieden, die durch ein Herausschwenken des Überrollbügels auftreten könnten. Ein durch eine Schwenkbewegung ausgefahrener Überrollbügel ist beispielsweise in der DE-PS 37 32 562 (s. Fig. 1) beschrieben. Wie aus der zuletzt genannten Patentschrift ersichtlich, unterscheidet man bei den bekannten Überrollbügelsystemen zwischen Crash-Antrieb und Komfortantrieb. Dabei dient der Crash-Antrieb dazu, den Überrollbügel im Crash-Fall in hinreichend kurzer Zeit in seine den Fahrgast schützende, ausgefahrene Endstellung zu bringen, während es die Aufgabe des Komfortantriebs ist, den Überrollbügel in seine Ausgangslage oder evtl. in eine Zwischenlage mit langsamerer Geschwindigkeit zurückzuführen.

Vielfach dient der Komfortantrieb auch dazu, beim Zurückfahren des Überrollbügels die für den Crash-Antrieb notwendige Energie zu speichern, beispielsweise durch Aufladen eines Federspeichers.

Die bekannten Crash-Antriebe sind regelmäßig Energiespeicher, die in Ausfahrrrichtung des verriegelten Bügels vorgespannt sind, wie beispielsweise Federspeicher. Im Crash-Fall wird die Verrieglung durch einen Chrash-Impuls gelöst und der Bügel wird sehr schnell in seine ausgefahrene Endlage gefahren. Für einen Komfortantrieb sind solche Antriebe nicht verwendbar.

In der älteren, nicht vorveröffentlichten EP-A-459 213 sind verschiedene Antriebe für ausschwenkbare und ausfahrbare Überrollbügel beschrieben. Ein und derselbe Antriebsmotor wird sowohl für die Komfort- als auch für die Crash-Betätigung verwendet. Allerdings sind bei den translatorisch ausfahrbaren Ausführungsbeispielen Federspeicher zur Unterstützung der Ausfahrbewegung vorgesehen. Zur Übersetzung des Antriebsdrehmomentes in eine translatorische Bewegung werden Zahnradgetriebe mit Gewindespindel oder Seilgetriebe mit z.T. unterschiedlich wählbaren Übersetzungen verwendet. Das Getriebe ist zwischen den Bügelschenkeln angeordnet und wirkt jeweils auf ein zwischen den Bügelschenkeln befestigtes Querjoch ein.

Die WO-A-91/02669 zeigt in Fig. 6 einen Überrollbügel mit einem Antrieb der eingangsgenannten Art. Der Antrieb ist ein Federspeicher für den Crashfall, der mittig angeordnet ist und auf zwei spiegelsymmetrisch aufgebaute Übertragungsglieder einwirkt, die mit je einem vertikalen Bügelschenkel verbunden sind. Die Übertragungsglieder bewirken durch geschickte Hebelanordnungen, daß der Hub des Überrollbügels bei einer Ausfahrbewegung wesentlich größer ist als der auslösende Hub des Federspeichers.

Nachteilig beim gattungsgemäßen Stand der Technik ist es nun, daß bei den bekannten Überrollbügel-Systemen für den Komfortantrieb und den Crashantrieb zwei unterschiedliche Antriebsaggregate verwendet werden. Verzichtet man andererseits auf den Komfortantrieb gemäß der DE-OS 15 55 955, so treten Schwierigkeiten beim Laden des für den Crashantrieb notwendigen Aggregats auf.

Der vorliegenden Erfindung liegt die Aufgabe zugrunde, einen Antrieb der genannten Art anzugeben, der sowohl die für den Crashantrieb als auch den Komfortantrieb gewünschten Merkmale aufweist, andererseits aber mit einem einzigen Antriebsaggregat auszukommen vermag.

Diese Aufgabe wird durch die sich aus dem kennzeichnenden Teil des Anspruchs 1 ergebende Merkmalskombination gelöst. Durch die Verwendung zweier parallel über ein Band-, Riemen- oder Kettengetriebe drehend angetriebene Übersetzungsglieder wird sowohl für eine hinreichende Übersetzung der Antriebsgeschwindigkeit in die benötigte Ausfahrgeschwindigkeit als auch für eine Übersetzung der Geschwindigkeitsrichtung in die gewünschte Richtung gesorgt. Damit wird es möglich, andere Antriebsaggregate zum Antrieb im Crash-Fall anzuwenden als bisher üblich. Diese Antriebsaggregate sind preiswerter. Durch Verlangsamen der Geschwindigkeit des Antriebsaggregats und durch Ändern der Antriebsrichtung werden die Merkmale für die Bewegung des Überrollbügels erreicht, die man bisher nur mit einem speziellen Komfortantrieb erzielen konnte. In der Regel wird der Überrollbügel, wie in der DE-OS 15 55 955 oder DE-OS 38 22 461 geschildert, durch zwei ausfahrbare Säulen in seiner Höhe bewegt.

Als Antriebsaggregat empfiehlt sich in vorteilhafter Weiterbildung der Erfindung die Verwendung eines Elektromotors. Dieser ist zum einen relativ preiswert erhältlich, zum anderen ist eine Richtungsumkehr ohne Schwierigkeiten möglich, so daß die Komfortmerkmale leicht erhalten werden können. Des weiteren läßt sich die Geschwindigkeit von Elektromotren vergleichsweise einfach steuern.

Einen sehr einfachen und stabilen Aufbau des Übersetzungsglieds erhält man unter Verwendung der sich aus Anspruch 3 ergebenden Merkmalskombination. Es ist allerdings darauf zu achten, daß die Spindel in Axialrichtung hinreichend sicher gegenüber dem Chassis des Kraftfahrzeuges gelagert ist, da diese in Längsrichtung im Crash-Fall in der Lage sein muß, erhebliche Längskräfte aufzunehmen, die von dem Bügel ausgeübt werden.

In Weiterbildung der Erfindung empfiehlt es sich, hierzu als Gewinde für die Spindel und für die der Spindel zugeordnete Gewindemutter des Überrollbügels ein selbstsperrendes Gewinde zu verwenden. Das bedeutet, daß die Windungen des Gewindes so wenig steil gewählt sind, daß über den Bügel in Längsrichtung der Spindel auf die Mutter des Bügels ausgeübte Kräfte nicht in der Lage sind, die Spindel in Umdrehung zu setzen wodurch ein Eindrücken des Bügels in Richtung Ruhelage verhindert wird. Zum Selbstsperren des Gewindes kann dabei allerdings auch der Antrieb der Spindel mit ausgenutzt werden, etwa indem die Reibung des Motors oder andere Übersetzungshilfen über eine rutschfeste Verbindung auf die Spindel übertragen werden.

Eine weitere, sehr vorteilhafte Möglichkeit zur Übersetzung der Antriebskraft des Antriebsaggregats in eine translatorische Bewegung des Überrollbügels ist durch die Verwendung der sich aus Anspruch 5 ergebenden Merkmalskombination möglich. Durch derartige Maßnahmen kann eine Drehbewegung des Antriebsaggregats in eine translatorische Bewegung des Überrollbügels umgesetzt werden. Hierbei empfiehlt sich insbesondere die Anwendung der Merkmalskombination nach Anspruch 6, da hierdurch die Möglichkeit besteht, das Übersetzungsglied räumlich sehr günstig, beispielsweise innerhalb eines Autositzes anzuordnen. Weiterhin erlaubt diese Merkmalskombination vorteilhafte Weiterbildungen, wie sie beispielsweise durch die Merkmale nach Anspruch 7 gegeben sind.

Die Anwendung der Merkmale nach Anspruch 7 bedeuten nicht nur, daß verhindert wird, daß der Überrollbügel aus seiner am weitesten ausgefahrenen Endlage durch Fortsetzung der Antriebsbewegung zurückgefahren werden kann, sondern sie schafft gleichzeitig auch Voraussetzungen für eine Anwendung der Merkmalskombination nach Anspruch 8. Durch diese Merkmale wird nämlich sichergestellt, daß auch unter erheblichen Kräften, die den Überrollbügel im Crash-Fall möglicherweise versuchen, in seine Ruhelage zurückzustellen, dieser in seinem ausgefahrenen Zustand verharrt. Es wird also mit einer einfachen Maßnahme ein Verhalten erreicht, das andernfalls durch recht aufwendige Halte- und Sperreinrichtungen bewirkt werden müßte, wie sie im Zusammenhang mit Fig. 9 in der DE-PS 37 32 562 beschrieben sind.

Insbesondere bei der Verwendung eines Elektromotors oder eines anderen Antriebsaggregats, welches im Anfahrzustand einen eigenen Totpunkt aufweisen kann, empfiehlt sich in Weiterbildung der Erfindung die Verwendung der Merkmals kombinationen des Anspruchs 9 und speziell des Anspruchs 10. Hierdurch wird sichergestellt, daß auch bei kleinem oder nicht vorhandenem Drehmoment des Antriebsaggregats im Anfahrzustand die Bewegung des Übersetzungsgliedes einsetzt, die danach durch das Antriebsanggregat insbesondere den Elektromotor weitergeführt wird. Hierdurch läßt sich eine erhebliche Beschleunigung der Ausfahrzeit des Überrollbügels erreichen.

Gemäß der Merkmalskombination nach Anspruch 11 ist der erfindungsgemäße Antrieb hervorragend geeignet für Überrollbügel, die in den Rückenlehnen von Autositzen untergebracht sind, gleichgültig, ob es sich nun um Vordersitze oder Rücksitze von Kraftfahrzeugen handelt.

Ein weiterer Vorteil der Erfindung besteht in der vorteilhaften Weiterbildungsmöglichkeit gemäß Anspruch 12, da hier Überrollbügel und Kopfstütze vereinigt werden. Die Erfindung gibt hierbei insbesondere die Möglichkeit, im Ruhezustand oder im gefahrenfreien Zustand gleichzeitig auch die Kopfstütze der Rückenlehne mit dem ohnedies für den Überrollbügel benötigten Antrieb auf die gewünschte Höhe einzustellen. Im Crash-Fall wird dann aufgrund besonderer Crash-Impulse der Überrollbügel in die schützende Endlage schnell (0,3 bis 0,5 Sek.) ausgefahren.

Ausführungsbeispiele der Erfindung werden nachfolgend anhand der Zeichnung erläutert. Darin zeigt:
- Fig. 1: in teilweise geschnittener Darstellung ein erstes Ausführungsbeispiel für einen mit einem erfindungsgemäßen Antrieb angetriebenen, die Rückenlehne eines Autositzes eingebauten Überrollbügel,
- Fig. 2: ein zweites Ausführungsbeispiel eines Überrollbügels gemäß Fig. 1
- Fig. 3: ein drittes Ausführungsbeispiel eines Überrollbügels gemäß Fig. 1

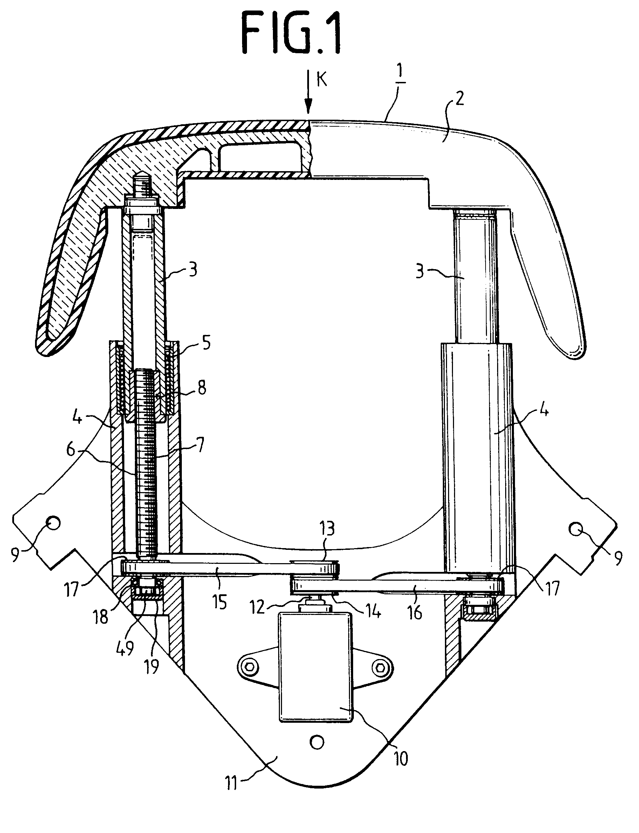

In Fig. 1 ist ein Überrollbügel 1 gezeigt, der im wesentlichen aus dem Bügel 2 und zwei hohlen Säulen 3 besteht. Der Bügel 1 ist dabei an eine vorzugsweise aus Leichtmetall oder Kunststoff gegossene Konstruktion. Die Säulen 3 sind in Trägerrohren 4 jeweils über ein Rollenlager 5 leichtgängig in Längsrichtung verschiebbar geführt.

In Fig. 1 ist der Bügel 2 in ausgefahrener Stellung gezeigt. Er ist in der Zeichnung nach unten einfahrbar, und zwar soweit, bis der Bügel 2 auf dem Ende des jeweiligen Trägerrohrs 4 aufliegt. Als Übersetzungsglied dient eine Gewindespindel 6 mit einem selbsthemmenden Gewinde 7, welches an einer Gewindebuchse 8 angreift, die fest mit der Säule 3 verbunden ist.

Dreht sich also die Spindel 6 um ihre Längsachse, so wird die Gewindebuchse 8 somit auf der Spindel hinaufoder hinuntergeschraubt und bewegt damit den Bügel 2 nach oben oder unten, je nach Drehrichtung der Spindel.

Die Trägerrohre 4 sind fest mit der Rückenlehne eines Autositzes verbunden, etwa durch Verschrauben mittels der Schraublöcher 9 einer Montageplatte 11.

Das Antriebsaggregat besteht aus einem Elektromotor 10, der fest mit einer Montageplatte 11 verbunden ist, gegenüber der auch die Trägerrohre 4 fixiert sind. Die Antriebswelle 12 des Motors treibt zwei an ihr fixierte Antriebszahnräder 13,14 an, die über Zahnriemen 15,16 auf zweite Antriebszahnräder 17 einwirken. Diese Antriebszahnräder 17 sind fest mit der Spindel 6 verbunden, so daß die Drehbewegung der Antriebswelle 12 in eine Drehbewegung der Spindel 6 umgesetzt wird. Die Spindel selbst ist über ein Kugellager 18 drehbar im Trägerrohr 4 gelagert, wobei eine Axialbewegung der Spindel durch das Kugellager 18 verhindert wird.

Um zu verhindern, daß auf den Bügel 2 in der Zeichnung von oben wirkende Kräfte K den Bügel nach unten in seine Ruhelage schieben können, ist zum einen das Gewinde 7 zwischen Gewindebuchse 8 und Spindel 6 selbsthemmend. Zum anderen ist eine nach unten gerichtete Bewegung der Spindel längs ihrer Längsachse durch eine in das Trägerrohr 4 von unten eingeschraubte Verschlußbuchse 19 verhindert, an der sich das untere Ende 49 der Spindel 6 abstützt.

Der Selbsthemmungseffekt des Gewindes 7 wird noch unterstützt durch die Wirkung des Zahnriemens 15 der sowohl gegenüber den Antriebszahnrädern 17,13 eine eigene Reibung besitzt, zusätzlich aber auch noch den Reibungseffekt des Elektromotors 10 auf die Spindel 6 überträgt. Insofern kann also das Gewinde steiler gewählt werden als es durch den Selbsthemmungseffekt des Gewindes allein notwendig wäre, wodurch sich die Ausfahrgeschwindigkeit des Bügels 2 bei gleicher Umdrehungszahl des Motors noch steigern läßt.

Die in bezug auf das in der Zeichnung linke Trägerrohr 4 beschriebenen Vorgänge finden analog innerhalb und im Zusammenhang mit dem rechten Trägerrohr statt. Dabei ist zu beachten, daß die Antriebsbewegung der rechten Säule 3 mit dem der linken Säule möglichst genau übereinstimmt, um ein Verkanten der beiden Säulen bzw. Spindeln innerhalb der Trägerrohre 4 zu vermeiden. Hierzu dient in Fig. 1 die Wahl eines Zahnriemens der einen gegeneinander gerichteten Schlupf der beiden Zahnriemen 15,16 vermeidet, so daß die beiden zweiten Antriebszahnräder 17 streng zueinander parallel laufen.

Das Ausführungsbeispiel nach Fig. 1 zeichnet zum einen dadurch aus, daß unterhalb des Bügels 2 ein erheblicher Freiraum besteht, der aus Gründen der Optik und der Gewichtseinsparung vielfach erwünscht ist. Andererseits muß der Elektromotor 10 eine hinreichend große Drehzahl besitzen, um trotz des vergleichsweise steigungsarmen Gewindes 7 den Bügel 2 im Crash-Fall hinreichend schnell ausfahren zu können.

Während nun die maximale Ausfahrgeschwindigkeit des Bügels von dem Zeitraum bestimmt ist, der vom Auslösen des Elektromotors (Chrash-Impuls) bis zum möglichen Unfall verbleibt (0,3 bis 0,5 Sek.) läßt sich der Motor 10 durch Umstellen auf einer niedrigere Umdrehungszahl unschwer in einen Komfortantrieb verwandeln, in dem in Ruhelage oder weitgehend gefahrenfreier Lage der Bügel langsam in Ruhestellung oder in eine Zwischenstellung gefahren wird. Auch in einer derartigen Zwischenstellung verliert der Bügel 2 seine schützende Wirkung nicht, so lange er nur in bezug auf die Körpergröße des Fahrgastes weit genug herausgefahren ist, da er durch die Selbsthemmung der Spindel nicht eingedrückt werden kann. Das Übersetzungsglied kann als Einheit aus Antriebszahnrad und Kniegelenk betrachtet werden.

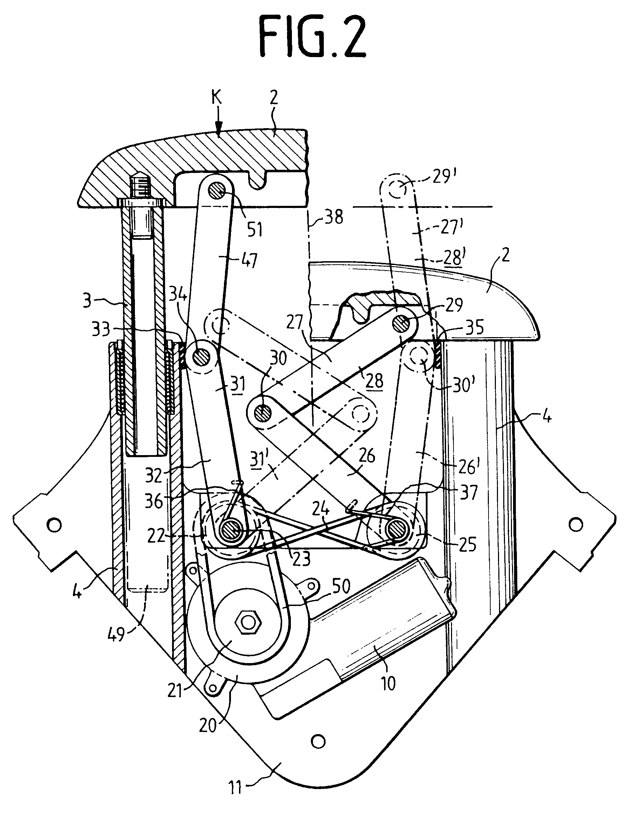

Fig. 2 zeigt ein zweites Ausführungsbeispiel der Erfindung, welches dem ersten Ausführungsbeispiel in einer ganzen Reihe von Merkmalen ähnlich ist. Zur größeren Übersichtlichkeit werden in Fig. 1 und Fig. 2 gleichartige Bauelemente auch gleichartig bezeichnet und mit den gleichen Bezugszeichen versehen.

Ebenso wie in Fig. 1 ist auch in Fig. 2 der Bügel 2 mit einer eingeschraubten Säule 3 versehen, die innerhalb des Trägerrohrs 4 über ein leichtgängiges Rollenlager 5 längsverschieblich gelagert ist. In Fig. 2 ist auf der linken Seite der Bügel in seiner ausgefahrenen Stellung gezeichnet, während auf der rechten Seite die eingefahrene Stellung dargestellt ist, die auch durch das gestrichelte Ende 49 der Säule 3 auf der linken Seite angedeutet ist.

Nachfolgend wird von der auf der rechten Seite in Fig. 2 dargestellten Ruhelage des Bügels 2 ausgegangen. In dieser Lage ist die Säule 3 komplett in das Trägerrohr 4 eingefahren. Zum Herausfahren des Bügels 2 dient der Elektromotor 10, der aus der Sicht des Betrachters hinter der Montageplatte 11 an dieser montiert ist. Der Motor 10 betreibt über einen ebenfalls an der Montageplatte 11 befestigte und aus dieser in Richtung zum Betrachter hin hervorragenden Getriebeblock 20 ein erstes Antriebszahnrad 21 an, welches über einen ersten Zahnriemen 50 wiederum an ein zweites Antriebszahnrad 22 dreht. Das zweite Antriebszahnrad 22 ist auf einer Welle 23 drehbar gelagert, die mit der Montageplatte 11 fest verbunden ist, und senkrecht zu dieser steht. Die Drehbewegung des zweiten Antriebszahnrades 22 wird über einen Bandantrieb 24 auf ein drittes Antriebszahnrad 25 übertragen, welches ebenso wie das Antriebszahnrad 22 gelagert ist.

Mit dem dritten Antriebszahnrad 25 ist das in der Zeichnung untere Ende eines ersten Hebels 26 fest verbunden, der zusammen mit einem oberen Hebel 27 ein Kniegelenk 28 bildet, welches mit seinem oberen Ende 29 drehbar an dem Bügel 2 angreift. Durch die aufgrund des Elektromotors 10 zwangsweise erfolgende Drehung des dritten Antriebszahnrades 25 und damit des unteren ersten Hebels 26 gelangt der Drehpunkt 30 des Kniegelenks 28 in die gestrichelt dargestellte Position 30'. Entsprechend gilt für die Elemente 26,27 und 29, die in die gestrichelt dargestellten Positionen 27',28' und 29' gelangen.

Das für die in Fig. 2 rechte Seite Gesagte gilt auch für Fig. 2 auf der linken Seite, wobei dort das Kniegelenk 31 schon in geöffneter Stellung dargestellt ist, bei der sich der Bügel 2 in ausgefahrener Lage befindet. Der Antrieb des Kniegelenks 31 erfolgt dabei aus der gestrichelt dargestellten Lage 31', wobei die Drehung des unteren Hebels 32 wiederum durch die Drehung des zweiten Antriebszahnrades 22 erzwungen wird, welches gegenüber der Montageplatte 11 analog dem dritten Antriebszahnrad 25 drehbar und mit dem unteren Hebel 32 fest verbunden ist. Damit dreht sich aufgrund der Wirkung des Elektromotors sowohl das zweite Antriebszahnrad 22 als auch der untere erste Hebel 32 des Kniegelenks 31 in der Zeichnung nach links in die mit ausgezogenen Linien dargestellte ausgefahrene Lage.

Dabei ist zu beachten, daß der Hebel 32 ebenso wie der Hebel 26 insgesamt nur um einen Winkel 40 bis 50° schwenkt, so daß bei einer vergleichsweise geringen Umdrehungszahl des Elektromotors 10 der Bügel 2 schnell in seiner links dargestellte obere Endlage kommt, was für den Crash-Fall sehr wichtig ist.

In Fig. 2 ist die Drehbewegung der beiden Antriebszahnräder 22 und 25 mittels eines Bandantriebes 24 synchronisiert. Dabei kann der Bandantrieb aus einer Kette oder einen aus Zähnen versehenen Band bestehen, das einen Gleichlauf der Zahnräder 22 und 25 garantiert.

Es ist allerings auch möglich, auf den Bandantriebs 24 zu verzichten und den Bügel 2 nur mit Hilfe des Kniegelenks 31 zu transportieren. Dabei dient die Wirkung des Kniegelenks 28 nur zur Unterstützung des Gleichlaufs und zur Abstützung des Bügels 2 bei ausgefahrener Endlage im Crash-Fall, wie weiter unten noch erläutert wird.

Wie aus Fig. 2 in der linken Seite zu ersehen, liegt im ausgefahrenen Zustand das Kniegelenk 31 in Höhe des Drehpunktes 34 an einem als Dämpfungspolster 33 ausgestalteten Anschlag am Trägerrohr 4 an. Das Kniegelenk 31 ist dabei wie aus Fig. 2 ersichtlich, leicht nach links ausgeknickt, so daß eine auf den Bügel 2 senkrecht nach unten wirkende Kraft K versucht den ersten Hebel 32 nach links weiter gegen den Anschlag 33 zu drehen. Hierdurch ist der Bügel 2 entgegen der Kraft K in seiner oberen Endlage in einfacher Weise gesichert. Entsprechendes gilt naturgemäß für das symmetrisch angeordnete Kniegelenk 28 auf der rechten Seite von Fig. 2 wobei im ausgefahrenen Zustand der Drehpunkt 30 an dem Anschlag 35 anliegt.

In Fig. 2 sind zwei Spiralfedern 36,37 gezeigt, die auf der Welle 23 der Antriebszahnräder 22,25 mit ihren Windungen gelagert sind und deren unteren Arme sich an der Montageplatte 11 abstützen, während die oberen Arme versuchen, die Hebel 26, 32 von der Symmetrieebene 38 her die nach außen zu den Säulen 4 hin zu drücken. Damit ist die Wirkung der beiden Spiralfedern 36,37 derart, daß sie versuchen, den Bügel 2 in seinem ausgefahrenen Zustand zu transportieren. Die Wirkung der Federn besteht insbesondere dahin, beim Anfahren des Bügels aus der Ruhelage die Wirkung des Elektromotors 10 zu unterstützen. Dies ist insbesondere dann wichtig, wenn der Motor zum Zeitpunkt des Anlaufes sich in einer toten Lage befinden sollte. Durch diese Maßnahme kann man das Ausfahren des Bügels 2 erheblich beschleunigen. Der Vorteil der Federn 36,37 besteht weiterhin darin, daß sie die Kniegelenke 31,28 elastisch in der in Fig. 2 links gezeigten Totpunktlage halten, bei der das Kniegelenk 31 am Anschlag 33 anliegt. So können durch Schüttelbewegungen des Fahrzeuges die Kniegelenke nicht aus der Totpunktlage gebracht werden.

Im Ausführungsbeispiel nach Fig. 2 können das Kniegelenk (z.B. 31) mit dem Antriebszahnrad als Übersetzungsglied aufgefaßt werden, während die restlichen Übertragungsglieder bis zum Elektromotor 10 hin ein Getriebe bilden.

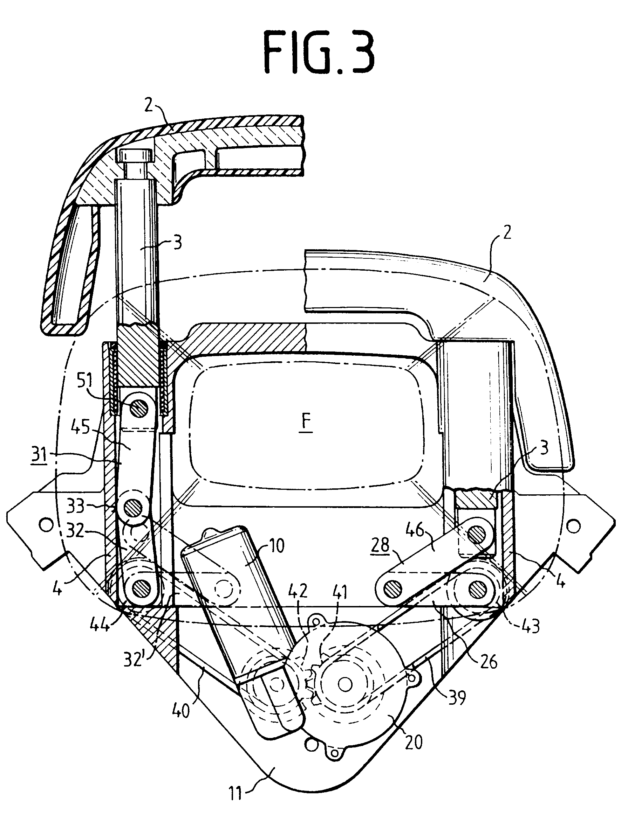

Fig. 3 zeigt ein drittes Ausführungsbeispiel der Erfindung, wobei wiederum die Bauelemente die gleichen Bezugszeichen erhalten haben, die mit den Bauelementen der vorangegangenen Ausführungbeispiele vergleichbar sind.

Dabei arbeitet das Ausführungsbeispiel nach Fig. 3 weitgehend gleichartig, wie das Ausführungsbeispiel nach Fig. 2, so daß im folgenden nur die Merkmale erläutert werden, durch welche sich die beiden Ausführungsbeispiele unterscheiden.

In Fig. 3 arbeitet wieder ein Elektromotor 10, über einen Getriebeblock 20 auf die beiden Antriebsriemen 39,40. Dabei wird von dem Motor 10 über den Getriebeblock 20 ein erstes Antriebszahnrad 41 bewegt, welches an einem zweiten Antriebszahnrad angreift welches und gegenüber der Montageplatte 11 gelagert ist. Damit laufen beide Antriebszahnräder 41,42 miteinander synchron, was dementsprechend auch für die Antriebsriemen 39, 40 zutrifft.

Die Antriebsriemen 39,40 wirken auf die drehbar gegenüber der Montageplatte 1 gelagerten dritten und vierten Antriebszahnräder 43,44 ein, welche die unteren Hebel 26,32 zweier Kniegelenke 28,31 drehen. In Fig. 3 ist der untere Hebel 26 in Ruhstellung des Bügels 2 und auf der linken Seite der untere Hebel 32 in ausgefahrener Stellung des Bügels 2 in ausgezogener Darstellung gezeigt. Ebenso wie die bei dem Ausführungsbeispiel gemäß Fig. 3 schwenken die beiden Hebel 26,32 aufgrund der Drehbwegung des Motors 10 aus ihrer waagerechten Ruhelage in eine im wesentlichen senkrechte Endlage, bei der der Bügel 2 seine Endstellung erreicht.

Ebenso wie bei dem Ausführungsbeispiel nach Fig. 2 liegt auch bei dem dritten Ausführungsbeispiel nach Fig. 3 im ausgefahrenen Zustand des Bügels 2 jeder der beiden Kniegelenke 28,31 in Höhe seines mittleren Drehpunktes an einem Anschlag 33 an, wodurch wiederum die Verriegelung des Antriebssystems gegenüber einer Kraft K erreicht wird, wie weiter oben beschrieben.

Das Ausführungsbeispiel nach Fig. 3 unterscheidet sich weiterhin von dem Ausführungsbeispiel nach Fig. 2 dadurch, daß die Hebel der beiden Kniegelenke 28,31 gemäß Fig. 3 sehr viel kürzer sind als gemäß Fig. 2. Hierdurch können zum einen die oberen Hebel 45,46 direkt am unteren Ende der Säulen 3 angreifen und arbeiten innerhalb der Länge des Rohres 4. Hierdurch bekommt man eine optisch sehr viel besser wirkende Ausgestaltung als bei dem Ausführungsbeispiel nach Fig. 2, bei dem im ausgefahrenen Zustand die oberen Hebel 27,47 parallel zu den Säulen 3 zum Bügel 2 hin aus der Montageplatte 11 herausragen. Im übrigen erhält man zwar einen auf etwa 90° vergrößerten Schwenkhebel, gleichzeitig aber einen erheblich verminderten Schwenkbereich, so daß sich eine etwa vierekcige Fäche F ergibt, in die die Kniegelenke 28,31 nicht hineinschwenken, so daß die Fläche F als durchbrochene Ausnehmung in der Lehne eines Fahrzeugsitzes ausgestaltet sein kann.

Die Variante gemäß Fig. 3 aber auch die anderen Varianten eignen sich somit zur Anordnung in den Rückenlehnen von Fahrzeugsitzen, wobei sowohl der Überrollbügel in Vordersitzen als auch in Hintersitzen befestigt werden kann. Dabei läßt sich an jedem der Fahrzeugsitze eines Kraftfahrzeuges ein eigener Überrollbügel befestigen.

Der im Zusammenhang mit Fig. 1 beschriebene Komfortantrieb d.h. das langsame Ein- und Ausfahren des Bügels 2 läßt sich auch mit den Ausführungsbeispielen nach Fig. 2 und 3 erreichen. Vorteilhaft ist, daß bei den beiden zuletzt genannten Ausführungsbeispielen der Elektromotor nur eine relativ geringe Drehzahl zu haben braucht, so daß beispielsweise auch der Motor eines Scheibenwischers eingesetzt werden kann.

In Fig. 3 kann das Kniegelenk 31 mit dem Antriebszahnrad als Übersetzungsglied aufgefaßt werden, während die verbleibenden Übertragungsglieder bis zum Elektromotor hin ein Getriebe bilden.

## Patentansprüche

1. Antrieb für einen durch Parallelverschiebung im wesentlichen in einer Ebene ausfahrenden Überrollbügel insbesondere für Personenkraftwagen, mit zwei zueinander parallel arbeitenden Übersetzungsgliedern (17,6,8 bzw. 31,28), deren jeweils eines Ende (17 bzw. 22 bzw. 44) von einem gemeinsamen Antriebsaggregat (10) bewegt wird, wobei durch diese Bewegung das jeweils andere Ende (8,51) der Übertragungsglieder den Überrollbügel (1) translatorisch verschiebt, dadurch **gekennzeichnet**, daß die Übersetzungsglieder sowohl für den Komfortantrieb als für den Crashantrieb bei unmittelbar bevorstehender Crashgefahr über ein Band-, Riemen- oder Kettengetriebe (13,15 bzw. 20,21,50) drehend vom gemeinsamen Antriebsaggregat (10) angetrieben werden.

2. Antrieb nach Anspruch 1, dadurch **gekennzeichnet**, daß die Antriebskraft durch die Welle (12) eines Elektromotors (10) ausgeübt wird, je nach dessen Drehrichtung der Überrollbügel (1) ein- bzw. ausgefahren wird.

3. Antrieb nach Anspruch 1 oder 2, dadurch **gekennzeichnet**, daß das Übersetzungsglied (6,8) eine über ein Getriebe (13,15) angetriebene Spindel (6) aufweist, die in ein entsprechendes Gewinde (8) des Überrollbügels (1) eingreift, wobei in Abhängigkeit von der Drehbewegung der Spindel (6) der Überrollbügel (1) ein- bzw. ausgefahren wird.

4. Antrieb nach Anspruch 3, dadurch **gekennzeichnet**, daß die Spindel (6) ein selbstsperrendes Gewinde (7) besitzt.

5. Antrieb nach Anspruch 1 oder 2, dadurch **gekennzeichnet**, daß das Übersetzungsglied (22,31) ein Drehglied ist, wobei die drehende Bewegung des ersten Endes (22) eine in Bewegungsrichtung des Überrollbügels (1) gerichtete Bewegung des anderen Endes (51) des Übersetzungsgliedes bedingt.

6. Antrieb nach Anspruch 5, dadurch **gekennzeichnet**, daß das Drehglied ein Kniegelenk (31) aufweist, dessen zwei Hebel (32,47) in einem Drehpunkt (34) zueinander drehbar gelagert sind, wobei die beiden Enden (22 bzw. 51) des Übersetzungsgliedes an den dem Drehpunkt (34) abgewandten Enden der Hebel (32,47) sitzen.

7. Antrieb nach Anspruch 6, dadurch **gekennzeichnet**, daß im ausgefahrenen Zustand das Kniegelenk (31) in Höhe seines Drehpunktes (34) an einem, eine weitere Drehbewegung begrenzenden Anschlag (33) anliegt.

8. Antrieb nach Anspruch 7, dadurch **gekennzeichnet**, daß bei Anlage des Kniegelenks (31) am Anschlag (33) eine Totpunktlage für das Kniegelenk (31) gegeben ist, die ein Zurückdrehen des Kniegelenks aufgrund einer in Einfahrrichtung auf den Überrollbügel (1) wirkenden Kraft (K) verhindert.

9. Antrieb nach einem der Ansprüche 5 bis 8, dadurch **gekennzeichnet**, daß das Drehglied durch einen Kraftspeicher (36 bzw. 37) in der Ausfahrrichtung des Überrollbügels (1) vorgespannt ist.

10. Getriebe nach Anspruch 9, dadurch **gekennzeichet**, daß der Kraftspeicher durch eine Spiralfeder (36,37) gebildet ist, die an dem das eine Ende (22,25) des Übertragungsgliedes (28,31) aufweisenden Hebel (32,26) zwischen dem einen Ende (23,25) und dem Drehpunkt (34,29) angreift.

11. Antrieb nach einem der Ansprüche 1 bis 10, dadurch **gekennzeichnet**, daß er in der Rückenlehne eines Autositzes angeordnet ist.

12. Antrieb nach Anspruch 11, dadurch **gekennzeichet**, daß der Überrollbügel (1) mit der Kopfstütze der Rückenlehne verbunden ist.

## Claims

1. Drive for a roll bar, in particular for passenger cars, extending substantially in one plane by parallel shifting, including two parallel operating transmission members (17, 6, 8, and 31, 28, respectively), the one end (17 or 22 or 44, respectively) is moved by a joint drive assembly (10), and, due to this movement, the respectively other end (8, 51) of the transmission members displaces the roll bar (1) translatorily,
**characterized** in that the transmission members both for the comfort drive and for the crash drive, in case of an imminent danger of crash, are rotatingly driven by the joint drive assembly (10) by way of a tape drive, belt drive or chain and sprocket wheel drive (13, 15 and 20, 21, 50, respectively).

2. Drive as claimed in claim l,
**characterized** in that the driving force is exerted by the shaft (l2) of an electric motor (l0), and the roll bar (l) is retracted or extended depending on the sense of rotation of the motor (10).

3. Drive as claimed in claim l or in claim 2,
**characterized** in that the transmission member (6, 8) includes a spindle (6) which is driven by a gearing (l3, l5) and engages a matching thread (8) of the roll bar (l), the roll bar (l) being retracted or extended depending on the rotary motion of the spindle (6).

4. Drive as claimed in claim 3,
**characterized** in that the spindle (6) has a self-locking thread (7).

5. Drive as claimed in claim l or in claim 2,
**characterized** in that the transmission member (22, 3l) is a rotary member, the rotary motion of the first end (22) determining a motion of the other end (5l) of the transmission member which is directed in the direction of motion of the roll bar (l).

6. Drive as claimed in claim 5,
**characterized** in that the rotary member includes a toggle joint (3l) having two levers (32, 47) which are supported rotatably with respect to each other in a pivot point (34), the two ends (22 and 5l) of the transmission member being disposed at the ends of the levers (32, 47) facing away from the pivot point (34).

7. Drive as claimed in claim 6,
**characterized** in that, in the extended condition, the toggle joint (3l) is abutted, at the level of its pivot point (34), against a stop (33) which limits further rotary motion.

8. Drive as claimed in claim 7,
**characterized** in that, in the event of abutment of the toggle joint (3l) on the stop (33), the toggle joint (3l) is in a dead-centre position which prevents the toggle joint from swinging back due to a force (K) acting on the roll bar (l) in the retracting direction.

9. Drive as claimed in any one of claims 5 to 8,
**characterized** in that the rotary member is pretressed by a power accumulator (36 and 37) in the extending direction of the roll bar (l).

10. Drive as claimed in claim 9,
**characterized** in that the power accumulator is configured as a spiral spring (36, 37) making catch at the lever (32, 26) which presents the one end (22, 25) of the transmission member (28, 3l), between the one end (23, 25) and the pivot point (34, 29).

11. Drive as claimed in anyone of claims l to l0,
**characterized** in that it is disposed in the back of an automobile seat.

12. Drive as claimed in claim l1,
**characterized** in that the roll bar (1) is coupled to the headrest of the seat back.

## Revendications

1. Dispositif d'entraînement pour un arceau de sécurité pouvant être déployé par coulissement parallèle essentiellement contenu dans un plan, en particulier pour un véhicule automobile particulier, comportant deux éléments de démultiplication (17, 6, 8 et 31, 28) travaillant parallèlement l'un à l'autre, dont une extrémité respective (17 ou 22 ou 44) est mue par un organe d'entraînement commun (10), l'autre extrémité respective (8, 51) des éléments de transmission déplaçant l'arceau de sécurité (1) en translation sous l'action de ce mouvement,
caractérisé en ce que les éléments de démultiplication sont entraînés en rotation par l'organe d'entraînement commun (10) par l'intermédiaire d'un entraînement par bande, par courroie ou par chaîne (13, 15 ou 20, 21, 50), en cas de risque imminent de retournement, aussi bien en mode d'entraînement confort qu'en mode d'entraînement collision.

2. Dispositif d'entraînement selon la revendication 1, caractérisé en ce que la force d'entraînement est exercée par l'arbre (12) d'un moteur électrique (10), l'arceau de sécurité (1) étant rentré ou déployé suivant le sens de rotation du moteur.

3. Dispositif d'entraînement selon la revendication 1 ou 2, caractérisé en ce que l'élément de démultiplication (6, 8) comporte une broche (6) entraînée par l'intermédiaire d'un mécanisme (13, 15) et s'engageant dans un filetage correspondant (8) de l'arceau de sécurité (1), l'arceau de sécurité (1) étant rentré ou déployé en fonction du sens de rotation de la broche (6).

4. Dispositif d'entraînement selon la revendication 3, caractérisé en ce que la broche (6) présente un filetage (7) autobloquant.

5. Dispositif d'entraînement selon la revendication 1 ou 2, caractérisé en ce que l'élément de démultiplication (22, 31) est un élément de rotation, le mouvement de rotation de la première extrémité (22) produisant à l'autre extrémité (51) de l'élément de démultiplication un mouvement qui est dirigé dans le sens du déplacement de l'arceau de sécurité (1).

6. Dispositif d'entraînement selon la revendication 5, caractérisé en ce que l'élément de rotation comporte une articulation à genouillère (31) dont les deux leviers (32, 47) sont articulés de façon pivotante l'un par rapport à l'autre au niveau d'un point de rotation (34), les deux extrémités (22 et 51) de l'élément de démultiplication se situant au niveau des extrémités des leviers (32, 47), qui sont opposées au point de rotation (34).

7. Dispositif d'entraînement selon la revendication 6, caractérisé en ce qu'à l'état déployé, l'articulation à genouillère (31), à hauteur de son point de rotation (34), vient en appui sur une butée (33) limitant la suite du mouvement de rotation.

8. Dispositif d'entraînement selon la revendication 7, caractérisé en ce que, lorsque l'articulation à genouillère (31) vient en appui sur la butée (33), on obtient une position de point mort de l'articulation à genouillère (31), qui empêche une rotation contraire de l'articulation à genouillère sous l'action d'une force (K) agissant sur l'arceau de sécurité (1) dans le sens de l'enfoncement de celui-ci.

9. Dispositif d'entraînement selon l'une des revendications 5 à 8, caractérisé en ce que l'élément de rotation est précontraint dans le sens du déploiement de l'arceau de sécurité (1) par un accumulateur d'énergie (36 et 37).

10. Mécanisme selon la revendication 9, caractérisé en ce que l'accumulateur d'énergie est constitué par un ressort en spirale (36, 37) qui agit sur le levier (32, 26) comportant ladite première extrémité (22, 25) de l'élément de transmission (28, 31), entre cette extrémité (23, 25) et le point de rotation (34, 29).

11. Dispositif d'entraînement selon l'une des revendications 1 à 10, caractérisé en ce qu'il est disposé dans le dossier d'un siège de voiture.

12. Dispositif d'entraînement selon la revendication 11, caractérisé en ce que l'arceau de sécurité (1) est relié à l'appuie-tête du dossier.
